# EUROPÄISCHE PATENTANMELDUNG

(11) **EP 2 700 669 A1**
(43) Veröffentlichungstag der Anmeldung: **26.02.2014**
(21) Anmeldenummer: 12181125.1
(22) Anmeldetag: 21.08.2012
(51) Int. Cl.: C08J 9/08, C08G 18/34, C08G 18/66, C08J 9/00

(54) **Plastisch verformbarer Polyurethan-Polyamid-Hartschaumstoff**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zur Herstellung von plastisch verformbaren Polyurethan-Polyamid-Hartschaumstoffen mit einer Geschlossenzelligkeit von kleiner als 70%, bei dem man (a) organisches Polyisocyanat mit (b) einer oder mehreren polymeren Verbindungen mit mindestens zwei gegenüber Isocyanaten reaktiven Wasserstoffatomen, (c) gegebenenfalls Kettenverlängerungs- und/oder Vernetzungsmittel, (d)eine oder mehrere Carbonsäuren mit einer Funktionalität von mindestens 2, (e) Katalysator, enthaltend eine Lewisbasekomponente und (f) gegebenenfalls Hilfsmittel und Zusatzstoffe zu einer Reaktionsmischung vermischt und diese Reaktionsmischung ausreagieren lässt. Weiter betrifft die vorliegende Erfindung einen plastisch verformbaren Polyurethan-Polyamid-Hartschaumstoff, der nach einem solchen Verfahren erhalten wird sowie die Verwendung eines solchen plastisch verformbaren Polyurethan-Polyamid-Hartschaumstoffs zur Innenraumverkleidung oder Motorraumverkleidung von Kraftfahrzeugen.

## Beschreibung

Die vorliegende Erfindung betrifft ein Verfahren zur Herstellung von plastisch verformbaren Polyurethan-Polyamid-Hartschaumstoffen mit einer Geschlossenzelligkeit von kleiner als 70%, bei dem man (a) organisches Polyisocyanat mit (b) einer oder mehreren polymeren Verbindungen mit mindestens zwei gegenüber Isocyanaten reaktiven Wasserstoffatomen, (c) gegebenenfalls Kettenverlängerungs- und/oder Vernetzungsmittel, (d) eine oder mehrere Carbonsäuren mit einer Funktionalität von mindestens 2, (e) Katalysator, enthaltend eine Lewisbasekomponente und (f) gegebenenfalls Hilfsmittel und Zusatzstoffe zu einer Reaktionsmischung vermischt und diese Reaktionsmischung ausreagieren lässt. Weiter betrifft die vorliegende Erfindung einen plastisch verformbaren Polyurethan-Polyamid-Hartschaumstoff, der nach einem solchen Verfahren erhalten wird sowie die Verwendung eines solchen plastisch verformbaren Polyurethan-Polyamid-Hartschaumstoffs zur Innenraumverkleidung oder Motorraumverkleidung von Kraftfahrzeugen.

Plastisch verformbare Polyurethan-Hartschaumstoffe, wobei plastisch verformbare Schäume, enthaltend Polyurethanbindungen, im Folgenden auch als "TF-Schäume" bezeichnet werden, und deren Verwendung als Innenverkleidung in Kraftfahrzeugen ist bekannt und beispielsweise beschrieben im "Kunststoffhandbuch, Band 7, Polyurethane", Carl Hanser Verlag, 3. Auflage 1993, Kapitel 6.5.4.1.

Weiter sind Schaumstoffe mit Urethan- und Amidgruppen bekannt. So beschreibt EP 423594 ein Verfahren zur Herstellung von Polyurethanschaumstoffen, bei dem Salze aus einer organischen Carbonsäure oder Polycarbonsäure mit speziellen organischen Basen eingesetzt werden. Dabei werden Formteile mit einer Dichte von mindestens 250 g/mol erhalten, da allgemein die COOH/NCO-Reaktion relativ langsam abläuft.

Dieses Problem der trägen COOH/NCO-Reaktion wird in DE 4202758 umgangen indem anstelle von einfachen oder mehrfachen Carbonsäuren Polyhydroxycarbonsäuren eingesetzt werden, die vorzugsweise zwei OH-Gruppen aufweisen, welche mit Isocyanaten reagieren und damit ein Polyurethangerüst bilden bevor die Carbonsäuregruppe mit dem Isocyanat reagiert. In einem Beispiel wird auch N-Methylimidazol als Katalysator eingesetzt.

Die Anforderungen an im Automobilinnenbereich eingebaute plastisch verformbare Polyurethanhartschaumstoffe, die meist als Verkleidungsteile im Dachbereich, so genannte Dachhimmel, eingesetzt werden, sind vielschichtig. So müssen diese eine gewisse Steifigkeit aufweisen und dürfen keine störenden Substanzen emittieren, die beispielsweise zu Geruchsbildung führen. Eine besonders wichtige Funktion des Dachhimmels ist dessen Beitrag zur Akustik. Hier ist es insbesondere Aufgabe Luftgeräusche, den sogenannten Luftschall, zu reduzieren. Die Güte dieser Dachhimmeleigenschaften hängt entscheidend von den Eigenschaften der verwendeten plastisch verformbaren Polyurethan-Hartschaumstoffe ab. Für eine gute Luftschallabsorption sind Polyurethan-Hartschäume mit einer möglichst hohen Luftdurchlässigkeit erstrebenswert. Die heute bekannten plastisch verformbaren Polyurethan-Hartschäume erfüllen diese Anforderungen nur eingeschränkt.

Die Schalldämpfung eines plastisch verformbaren Polyurethan-Hartschaumstoffs/ Dachhimmels ist zu einem großen Maße von seiner Luftdurchlässigkeit abhängig. So wird beobachtet, dass Dachhimmel aus Polyurethan-Hartschaumstoffen mit einer verbesserten Luftdurchlässigkeit den Luftschall besser dämpfen. Eine verbesserte Luftdurchlässigkeit und damit auch eine verbesserte Schalldämpfung kann durch "Nadeln" der thermoverformbaren Polyurethan-Hartschaumstoffe/Dachhimmel erfolgen. Dabei werden Nadeln in den fertigen Schaumstoff/Dachhimmel eingestochen und so die Luftdurchlässigkeit des Schaumstoffs/Dachhimmels und damit auch die Schalldämpfung verbessert und die mechanische Stabilität des Schaumes negativ beeinflusst wird. Dieses Verfahren hat aber den Nachteil, dass ein weiterer Arbeitsschritt zur Herstellung der schallabsorbierenden Polyurethanhartschaumstoffe nötig ist.

Eine weitere Möglichkeit zur Verbesserung der Luftdurchlässigkeit ist der Einsatz komplexer Polyolmischungen, die dazu führen, dass sich die Zellen im Schaum öffnen. Solche Polyolmischungen sind in EP 437787, DE 4333795, DE 102004062540 und EP 2247636 beschrieben.

Aufgabe der vorliegenden Erfindung war es ein Verfahren zur Herstellung von plastisch verformbaren Polyurethan-Polyamid-Hartschaumstoffen zu liefern, das einfach durchführbar ist, zu einem plastisch verformbaren Polyurethan-Polyamid-Hartschaumstoff mit guten mechanischen Eigenschaften, wie einer hohen Steifigkeit und einer geringen Sprödigkeit, und einer hohen Luftdurchlässigkeit führt. Insbesondere war es Aufgabe der vorliegenden Erfindung ein solches Verfahren zu liefern, das mit dem Einsatz von nur einem Polyol auskommt und die für die Schäumung erforderliche Wassermenge zu reduzieren.

Die vorliegende Aufgabe konnte gelöst werden durch ein Verfahren zur Herstellung von plastisch verformbaren Polyurethan-Polyamid-Hartschaumstoffen mit einer Geschlossenzelligkeit von kleiner als 70%, bei dem man (a) organisches Polyisocyanat mit (b) einer oder mehreren polymeren Verbindungen mit mindestens zwei gegenüber Isocyanaten reaktiven Wasserstoffatomen, (c) gegebenenfalls Kettenverlängerungs- und/oder Vernetzungsmittel, (d) eine oder mehrere Carbonsäuren mit einer Funktionalität von mindestens 2, (e) Katalysator, enthaltend eine Lewisbasekomponente und (f) gegebenenfalls Hilfsmittel und Zusatzstoffe zu einer Reaktionsmischung vermischt und diese Reaktionsmischung zum Polyurethan-Polyamid-Hartschaumstoff ausreagieren lässt. Dabei können im Rahmen der vorliegenden Erfindung die Einsatzstoffe (a) bis (f) jeweils als Einzelstoffe oder in Mischung mit weiteren Verbindungen der Komponenten (a) bis (f) eingesetzt werden.

Ein weiterer Gegenstand der vorliegenden Erfindung ist ein plastisch verformbarer Polyurethan-Polyamid-Hartschaumstoff, der nach einem solchen Verfahren erhalten wird sowie die Verwendung eines solchen plastisch verformbaren Polyurethan-Polyamid-Hartschaumstoffs zur Innenraumverkleidung oder Motorraumverkleidung von Kraftfahrzeugen.

Erfindungsgemäße plastisch verformbare Polyurethan-Polyamid-Hartschaumstoffe können, vorzugsweise bei Werkzeugtemperaturen von 70 bis 160 °C, besonders bevorzugt von 80 bis 150 °C und insbesondere 85 bis 140 °C, plastisch verformt werden.

Im Rahmen der Erfindung werden unter Polyurethan-Polyamid-Schaumstoffen Schaumstoffe gemäß DIN 7726 verstanden. Die erfindungsgemäßen Polyurethan-Polyamid-Hartschaumstoffe weisen dabei vorzugsweise eine Dichte von 5 bis 80 g/L, besonders bevorzugt 10 bis 50 g/L und insbesondere 15 bis 35 g/L auf. Die erfindungsgemäßen Polyurethan-Polyamid-Hartschaumstoffe weisen eine Druckspannung bei 10 % Stauchung von größer gleich 80 kPa, bevorzugt größer gleich 150 kPa, besonders bevorzugt größer gleich 180 kPa auf. Üblicherweise verfügt der erfindungsgemäße Polyurethan-Polyamid-Hartschaumstoff nach DIN ISO 4590 über eine Geschlossenzelligkeit von kleiner 70%, bevorzugt kleiner 50 %, besonders bevorzugt kleiner 20 und insbesondere von kleiner 10 % auf. Neben den geschlossenen Zellen liegen geöffnete Zellen vor, das bedeutet, dass bei einer Geschlossenzelligkeit von 70 % die Offenzelligkeit 30 % beträgt. Plastisch verformbare Polyurethanhartschaumstoffe und deren Verwendung als Innenverkleidung in Kraftfahrzeugen ist bekannt und beispielsweise beschrieben im "Kunststoffhandbuch, Band 7, Polyurethane", Carl Hanser Verlag, 3. Auflage 1993, Kapitel 6.5.4.1. oder in WO 2009203764.

Als organische Polyisocyanate a) werden vorzugsweise die technisch gut zugänglichen aromatischen Polyisocyanate, besonders bevorzugt Mischungen aus Diphenylmethan-diisocyanaten (MDI) und Polyphenyl-Polymethylenpolyisocyanaten, sogenanntes Roh-MDI, vorteilhafterweise mit einem monomer-MDI-Gehalt von 30 bis 65 Gew.-%, besonders bevorzugt von 35 bis 60 Gew.-% und insbesondere von 35 bis 55 Gew.-% eingesetzt.

Die Polyisocyanate a) können in Form von Polyisocyanatprepolymeren eingesetzt werden. Diese Polyisocyanatprepolymere sind erhältlich, indem vorstehend beschriebene Polyisocyanate (Bestandteil (a-1)) im Überschuss, beispielsweise bei Temperaturen von 30 bis 100 °C, bevorzugt bei etwa 80 °C, mit Polyolen (Bestandteil (a-2)), zum Prepolymer umgesetzt werden. Vorzugsweise werden dazu die im Folgenden unter b) beschriebenen Polyole eingesetzt. Gegebenenfalls können der Umsetzung zum Polyisocyanatprepolymer noch Kettenverlängerungsmittel (a-3) zugegeben werden. Als Kettenverlängerungsmittel (a-3) können alle im Folgenden unter c) beschriebenen Kettenverlängerer eingesetzt werden. Vorzugsweise wird dabei das Verhältnis von organischen Polyisocyanaten (a-1) zu Polyolen (a-2) und Kettenverlängerern (a-3) so gewählt, dass das Isocyanatprepolymer einen NCO-Gehalt von 10 bis 30 %, besonders bevorzugt von 18 bis 29 % aufweist.

Geeignet als organisches Polyisocyanat a) sind auch die Isocyanurat-, Biuret-, Carbodiimid- und/oder vorzugsweise Urethangruppen enthaltende Roh-MDI Modifikationen. Außerdem kann es für besondere Anwendungsgebiete zweckmäßig sein, dem Roh-MDI untergeordnete Mengen, beispielsweise bis maximal 10 Gew.-%, Toluylen-diisocyanate-Isomerengemische und/oder gegebenenfalls mit Biuret-, Carbodiimid- und/oder Urethangruppen modifiziertes 4,4'-und/oder 2,4' -MDI zuzusetzen.

Als polymere Verbindungen mit mindestens zwei gegenüber Isocyanaten reaktiven Wasserstoffatomen (b) können alle zur Polyurethanherstellung bekannten Verbindungen mit mindestens zwei reaktiven Wasserstoffatomen und einem zahlenmittleren Molekulargewicht von mindestens 300 g/mol eingesetzt werden. Diese weisen beispielsweise eine Funktionalität von 2 bis 8 und ein zahlenmittleres Molekulargewicht von 300 bis 12000 g/mol auf. So können beispielsweise Polyetherpolyamine und/oder Polyole, ausgewählt aus der Gruppe der Polyetherpolyole, Polyesterpolyole oder Mischungen daraus, verwendet werden. Dabei werden die Molekulargewichte anhand der OH-Zahl bestimmt.

Die bevorzugt zur Anwendung kommenden Polyole sind Polyetherole und/oder Polyesterole mit zahlenmittleren Molekulargewichten zwischen 300 und 12000 g/mol, bevorzugt 350 bis 6000 g/mol, insbesondere 400 bis weniger als 4000 g/mol, und bevorzugt einer mittleren Funktionalität von 2 bis 6, bevorzugt 2 bis 4.

Die erfindungsgemäß verwendbaren Polyetherole, werden nach bekannten Verfahren hergestellt. Beispielsweise können sie durch anionische Polymerisation mit Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren und unter Zusatz mindestens eines Startermoleküls, das 2 bis 8, vorzugsweise 2 bis 6, reaktive Wasserstoffatome aufweist, oder durch kationische Polymerisation mit Lewissäuren, wie Antimonpentachlorid, Borfluorid-Etherat u. a., oder Bleicherde als Katalysatoren hergestellt werden. Ebenso können Polyetherpolyole durch Doppelmetallcyanidkatalyse aus einem oder mehreren Alkylenoxiden mit 2 bis 4 Kohlenstoffatomen im Alkylenrest hergestellt werden. Auch tertiäre Amine können als Katalisator eingesetzt werden, beispilsweise Triethylamin, Tributylamin, Trimethylamin, Dimethylethanolamin, Imidazol oder Dimethylcyclohexylamin. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin (TDA) und 4,4'-, 2,4'- und 2,2'-Diaminodiphenylmethan (MDA) und polymerisches MDA. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan; Pentaerythrit, Sorbitol und Saccharose, und Mischungen davon. Die Polyetherpolyole können einzeln oder in Form von Mischungen verwendet werden.

Polyesterole werden z.B. hergestellt aus Alkandicarbonsäuren und mehrwertigen Alkoholen, Polythioetherpolyolen, Polyesteramiden, hydroxylgruppenhaltigen Polyacetalen und/oder hydroxylgruppenhaltigen aliphatischen Polycarbonaten, vorzugsweise in Gegenwart eines Versterungskatalysators. Weitere mögliche Polyole sind beispielsweise im "Kunststoffhandbuch, Band 7, Polyurethane", Carl Hanser Verlag, 3. Auflage 1993, Kapitel 3.1 angegeben.

Die bevorzugt zur Anwendung kommenden Polyesterole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol, Triole mit 3 bis 6 Kohlenstoffatomen, wie z.B. Glycerin und Trimethylolpropan und als höherwertiger Alkohol Pentaerythrit. Je nach den gewünschten Eigenschaften können die mehrwertigen Alkohole allein oder gegebenenfalls in Mischungen untereinander verwendet werden.

Vorzugsweise enthalten die polymeren Verbindungen mit mindestens zwei gegenüber Isocyanaten reaktiven Wasserstoffatomen (b) Polyole, besonders bevorzugt bestehen diese aus Polyetherolen. Dabei wird als Poyletherol vorzugsweise di- bis tetrafunktionelles Polyoxyalkylenoxidpolyol mit einer Hydroxylzahl von 20 bis 1000, vorzugsweise 100 bis 900 und besonders bevorzugt 300 bis 450 eingesetzt. Vorzugsweise beträgt die mittlere Funktionalität 2,5 bis 3,5. Das bevorzugt eingesetzte Polyetherpolyol weist vorzugsweise einen Anteil an sekundären Hydroxylgruppen von größer als 70 %, bezogen auf die Gesamtzahl an Hydroxylgruppen im Polyalkylenoxidpolyol, auf. Dabei enthält das Polyoxyalkylenoxidpolyol vorzugsweise mindestens 50 Gew.-%, besonders bevorzugt mindestens 80 Gew.-% Propylenoxid, bezogen auf den Gehalt an Alkylenoxyd im Polyalkylenoxidpolyol, auf.

Als Kettenverlängerungsmittel und/oder Vernetzungsmittel c) können Substanzen mit einem Molekulargewicht von vorzugsweise kleiner 300 g/mol, besonders bevorzugt von 60 bis 250 g/mol eingesetzt werden, wobei Kettenverlängerer 2 gegenüber Isocyanaten reaktive Wasserstoffatome und Vernetzungsmittel 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 300, besonders bevorzugt von 60 bis 250 und insbesondere 60 bis 200 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, 1,4-Butandiol, 1,6-Hexandiol, 1,10-Decandiol und Bis-(2-hydroxyethyl)-hydrochinon, 1,2-, 1,3-, 1,4-Dihydroxycyclohexan, Diethylenglykol, Dipropylenglykol, Tripropylenglykol, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Vernetzer (c) niedermolekulare hydroxylgruppenhaltige Polyalkylenoxide auf Basis Ethylen- und/oder 1,2-Propylenoxid, besonders bevorzugt Ethylen und trifunktionellen Startern, insbesondere Glycerin, eingesetzt.

Der Anteil an Kettenverlängerungsmittel und/oder Vernetzungsmittel c) am Gesamtgewicht der Komponenten b) bis f) beträgt, falls vorhanden, vorzugsweise 1 bis 60 Gew.-%, besonders bevorzugt 3 bis 40 Gew.-% und insbesondere 4 bis 15 Gew.-%. Vorzugsweise wird kein Kettenverlängerer eingesetzt.

Als Carbonsäuren (d) mit einer Funktionalität von mindestens 2 können beliebige aromatische, aliphatische oder cycloaliphatische die Carbonsäure mit mindestens zwei Carboxylgruppen eingesetzt werden. Diese weisen bevorzugt genau zwei Carboxylgruppen auf. Dabei können die Carbonsäuren im Rahmen der Erfindung auch ganz oder teilweise in Form deren Salze oder Anhydriden vorliegen. Vorzugsweise weisen die erfindungsgemäßen Carbonsäuren 3 bis 30 Kohlenstoffatome auf. Dabei sind die Carboxylgruppen bevorzugt an aliphatische Kohlenstoffatome gebunden. Besonders bevorzugt sind die Carbonsäuren mit einer Funktionalität von mindestens 2 rein aliphatisch. Insbesondere werden lineare, aliphatische Dicarbonsäuren mit 2 bis 30 Kohlenstoffatomen, bevorzugt 3 bis 9 Kohlenstoffatomen und insbesondere 5, 7 oder 9 Kohlenstoffatomen eingesetzt. In einer besonders bevorzugten Ausführungsform weisen die Carbonsäuren neben der COOH-Gruppe keine weiteren funktionellen Gruppen auf. Dabei weisen die Carbonsäuren (d) als Reinstoffe vorzugsweise eine Schmelztemperatur von kleiner als 200 °C, bevorzugt kleiner als 150 °C und insbesondere kleiner als 120 °C auf.

In einer weiteren Ausführungsform können als Carbonsäuren mit einer Funktionalität von mindestens 2 auch die unter (b) beschriebenen Polyester eingesetzt werden, wenn diese in Überschuss der Säurekomponente hergestellt wurden, so dass diese mindestens zwei, bevorzugt genau zwei Carboxyl-Endgruppen aufweisen. Diese werden im Folgenden als Polyesterdicarbonsäuren bezeichnet.

Das Gewichtsverhältnis der Komponenten (b) und (d) beträgt vorzugsweise 1 : 10 bis 10 : 1, besonders bevorzugt 5 : 1 bis 1 : 5 und insbesondere 3 : 1 bis 1 : 1.

In einer weiteren bevorzugten Ausführungsform liegt die Carbonsäure mit einer Funktionalität von mindestens 2 als Lösung in einem Lösungsmittel vor. Als Lösungsmittel kann dabei eine oder mehrere der unter (b) beschriebenen Substanzen dienen. Neben den unter (b) beschriebenen Substanzen kann auch eine ionische Flüssigkeit als Lösungsmittel dienen. Solche ionischen Flüssigkeiten sind bekannt und beispielsweise in EP 1984438 beschrieben. Besonders bevorzugt sind dabei ionische Flüssigkeiten, wobei als Kation für die ionische Flüssigkeit ein Kation eingesetzt wird, ausgewählt aus der Gruppe, bestehend aus Imidazoliumderivaten, Guanidiniumderivaten oder Pyrazoliumderivaten. In einer besonders bevorzugten Ausführungsform ist die ionische Flüssigkeit ausgewählt ist aus der Gruppe, bestehend aus 1-Ethyl-3-methylimidazoliummethylsulfonat, 1-Ethyl-3-methylimidazoliumdicyanamid, 1-Ethyl-3-methylimidazoliumethylsulfat, 1-Ethyl-3-methylimidazoliumthiocyanat, 1-Ethyl-3-methylimidazoliumtetrafluoroborat, 1-Ethyl-3-methylimidazoliumhexafluorophosphat, 1-Ethyl-3-methylimidazoliumdiethylphosphat, 1-Ethyl-3-methylimidazoliumbromid, 1-Ethyl-3-methylimidazolium-p-toluolsulfonat, 1-Butyl-3-methylimidazoliummethansulfonat, 1- Butyl-3-methylimidazoliumdicyanamid, 1-Butyl-3-methylimidazoliumethylsulfat, 1- Butyl-3-methylimidazoliumthiocyanat, 1- Butyl-3-methylimidazoliumdimethylphosphat, 1- Butyl-3-methylimidazoliumbromid, 1- Butyl-3-methyl-imidazolium-p-toluolsulfonat, 1-Butyl-3-methylimidazoliumtetrafluoroborat und 1-Butyl-3-methylimidazoliumhexafluorophosphat sowie Mischungen zweier oder mehrerer ionischer Flüssigkeiten daraus. Dabei kann auch eine Mischung aus einem oder mehreren Polyolen der Komponente (b), gegebenenfalls Kettenverlängerern und der einen oder mehreren ionischen Flüssigkeiten als Lösemittel für die Carbonsäure (d) dienen.

Das erfindungsgemäße Verfahren zeichnet sich dadurch aus, dass sich durch die Reaktion einer Carbonsäuregruppe mit einer Isocyanatgruppe ein gemischtes Carbonsäureanhydrid bildet, welches unter Abspaltung von Kohlendioxyd ein Amid bildet. Das so gebildete Kohlendioxyd führt zum Aufschäumen der Reaktionsmischung, so dass auf übliche Treibmittel, wie niedrigsiedende Flüssigkeiten oder chemische Treibmittel, wie Wasser, verzichtet werden kann. Dabei ist es wichtig, dass die Kettenwachstumsreaktion in der Reaktionsmischung und die Abspaltung von Kohlendioxyd zeitlich so aufeinander abgestimmt sind, dass ein qualitativ hochwertiger Schaum erhalten wird. Ist beispielsweise die CO₂-Abspaltung bei noch zu geringem Molekulargewicht der Polymerketten abgeschlossen, kollabiert der Schaum wieder, ist die Kettenwachstumsreaktion dagegen schon zu weit fortgeschritten, kann ein gleichmäßiges Aufschäumen nicht mehr erreicht werden. Dies wird durch die Katalysatorkomponente (e) eingestellt.

Vorzugsweise enthalten die Komponenten (a) bis (f) weniger als 4 Gew.-%, besonders bevorzugt weniger als 1 Gew.-% und insbesondere keine physikalischen Treibmittel, jeweils bezogen auf das Gesamtgewicht der Komponenten (a) bis (f). Dabei enthalten die Komponenten (b) bis (f) vorzugsweise weniger als 2 Gew.-% Wasser, besonders bevorzugt weniger als 1 Gew.-% Wasser, mehr bevorzugt weniger als 0,5 Gew.-% Wasser und insbesondere wenigen als 0,2 Gew.-% Wasser. Unter physikalischen Treibmitteln werden dabei im Rahmen dieser Erfindung Substanzen verstanden, die unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC.

Als Katalysatoren (e) können in der Polyurethanchemie üblicherweise verwendete Katalysatoren eingesetzt werden. Dies sind Verbindungen, die die Reaktion der reaktiven Wasserstoffatome, insbesondere der polymeren Verbindung (b) mit den organischen Polyisocyanaten (a) beschleunigen. In Betracht kommen organische Metallverbindungen, vorzugsweise organische Zinnverbindungen, wie Zinn(II)-salze von organischen Carbonsäuren, beispielsweise Zinn(II)-acetat, Zinn(II)-octoat, Zinn(II)-ethyl-hexanoat, Zinn(II)-laurat und die Dialkylzinn(IV)-salze von organischen Carbonsäuren, beispielsweise Dibutylzinndiacetat, Dibutylzinndilaurat, Dibutylzinnmaleat, Dioctylzinndiacetat sowie tertiäre Amine wie Triethylamin, Tributylamin, Dimethylcyclohexylamin, Dimethylbenzylamin, N-Methylimidazol, N-Methyl-, N-Ethyl-, N-Cyclohexylmorpholin, N,N,N',N'-Tetramethylethylendiamin, N,N,N',N'-Tetramethylbutylendiamin, N,N,N',N'-Tetramethyl-hexylendiamin-1,6, Pentamethyl-diethylentriamin, Tetramethyl-diaminoethylether, Bis-(dimethylaminopropyl)-harnstoff Dimethylpiperazin, 1,2-Dimethylimidazol, 1-Aza-bicyclo-[3,3,0]-octan, 1,4-Diaza-bicyclo-[2,2,2]-octan, und Alkanolaminverbindungen wie Triethanolamin, Tris-isopropanolamin, N-Methyl- und N-Ethyl-diethanolamin und Dimethylethanolamin. Als Katalysatoren kommen weiter in Betracht: Tris-(dialkylamino)-s-hexahydrotriazine, insbesondere Tris-(N,N-dimethylamino)-s-hexahydrotriazin, Tetraalkylammoniumsalze wie beispielsweise N,N,N-Trimethyl-N-(2-hydroxy-propyl)-formiat, N,N,N-Trimethyl-N-(2-hydroxy-propyl)-2-ethyl-hexanoat, Tetraalkyl-ammoniumhydroxide wie Tetramethylammoniumhydroxid, Alkalihydroxide wie Natriumhydroxid, Alkalialkoholate wie Natriummethylat und Kaliumisopropylat, sowie Alkali- oder Erdalkalisalze von Fettsäuren mit 1 bis 20 C-Atomen und gegebenenfalls seitenständigen OH-Gruppen.

Beispielsweise können gegenüber Isocyanaten reaktionsfähige tertiäre Amine wie beispielsweise N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyl-dipropanolamin, N,N,N'-Trimethyl-N'-hydroxyethyl-bisaminoethylether, N,N-Dimethylaminopropylharnstoff, N-(2-Hydroxypropyl)-imidazol, N-(2-Hydroxyethyl)-imidazol, N-(2-Aminopropyl)-imidazol und/oder die in EP-A 0 629 607 beschriebenen Umsetzungsprodukte aus Acetessigsäureethylester, Polyetherpolyolen und 1-(Dimethylamino)-3-amino-propan als Katalysator e) verwendet werden.

Die Katalysatoren (e) enthalten eine Lewisbasekomponente. Als Lewisbasekomponente wird dabei eine Verbindung bezeichnet, die freie Elektronenpaare zur Verfügung stellen kann. Vorzugsweise befindet sich das freie Elektronenpaar an einer organischen Verbindung, es kann aber auch an einem Metall oder einer metallorganischen Verbindung gebunden sein. In einer bevorzugten Ausführungsformbesteht die Lewisbasekomponente aus einer oder mehreren Verbindungen, die ein delokalisiertes π-Elektronensystem aufweisen. Besonders bevorzugt besteht die Lewisbasekomponente aus einer oder mehreren Verbindungen, ausgewählt aus der Gruppe, bestehend aus N-Methylimidazol, Melamin, Guanidin, Cyanursäure, Dicyanamid oder deren Derivaten. Insbesondere enthält die Lewisbasekomponente N-Methylimidazol oder dessen Derivate. Gegebenenfalls kann die Lewisbasekomponente auch als Salz einer der unter (d) genannten Carbonsäuren vorliegen. Der Anteil der Lewisbasekomponente, bezogen auf das Gesamtgewicht der Komponenten (a) bis (f) beträgt vorzugsweise 0,01 bis 2 Gew.-%, besonders bevorzugt 0,02 bis 1 Gew.-% und insbesondere 0,05 bis 0,5 Gew.-%. In einer besonders bevorzugten Ausführungsform der vorliegenden Erfindung werden neben der Lewisbasekomponente keine weiteren Katalysatoren eingesetzt.

Als Hilfsmittel und Zusatzstoffe (f) können Schaumstabilisatoren, Zellöffner, oberflächenaktive Substanzen, Reaktionsverzögerer, Stabilisatoren gegen Alterungs- und Witterungseinflüsse, Weichmacher, Flammhemmer, fungistatisch und bakteriostatisch wirksame Substanzen, Pigmente und Farbstoffe sowie die an sich bekannten üblichen organischen und anorganischen Füllstoffe eingesetzt werden.

Als Schaumstabilisatoren werden vorzugsweise siliconbasierte Schaumstabilisatoren verwendet. Weiter können Siloxan-Polyoxyalkylen-Copolymere, Organopolysiloxane, ethoxylierte Fettalkohole und Alkylphenole und Ricinusöl- bzw. Ricinolsäureester als Schaumstabilisatoren verwendet werden.

Als Zellöffner wirken beispielweise Paraffine, Polybutadiene, Fettalkohole und Dimethylpolysiloxane.

Als Stabilisatoren gegen Alterungs- und Witterungseinflüsse werden meist Antioxidantien eingesetzt. Dies können beispielsweise sterisch gehinderten Phenole, HALS-Stabilisatoren (hindered amine light stabilizer), Triazine, Benzophenone und der Benzotriazole sein.

Als oberflächenaktive Substanzen kommen beispielsweise Verbindungen in Betracht, welche zur Unterstützung der Homogenisierung der Ausgangsstoffe dienen und eine Phasenstabilität der Polyolkomponente über längere Zeiträume gewährleisten. Diese sind gegebenenfalls auch geeignet, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z. B. ölsaures Diethylamin, stearinsaures Diethanolamin, ricinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl und Zellregler, wie Paraffine, Fettalkohole und Dimethylpolysiloxane. Zur Verbesserung der Emulgierwirkung, der Zellstruktur und/oder Stabilisierung des Schaums eignen sich ferner oligomere Polyacrylate mit Polyoxyalkylen- und Fluoralkanresten als Seitengruppen.

Die oberflächenaktiven Substanzen werden üblicherweise in Mengen von 0,01 bis 5 Gew.-%, bezogen auf das Gesamtgewicht der Polyhydroxylverbindungen b), eingesetzt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat. Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat, Blähgraphit und Calciumsulfat oder Cyanursäurederivate, wie z. B. Melamin oder Mischungen aus mindestens zwei Flammschutzmitteln, wie z. B. Ammoniumpolyphosphaten und Melamin und/oder Blähgraphit sowie gegebenenfalls Stärke zum Flammfestmachen der erfindungsgemäß hergestellten PU-Hartschaumstoffe verwendet werden.

Vorzugsweise enthalten die Flammschutzmittel Blähgraphit und oligomeres Organophosphor-flammschutzmittel. Blähgraphit ist allgemein bekannt. Ein Organophosphor-Flammschutzmittel dieses Typs ist ganz allgemein in US 4,382,042 beschrieben. Dabei sind Organophosphor-Flammschutzmittel, die keine Halogenatome enthalten, bevorzugt.

Das oligomere Organophosphor-Flammschutzmittel enthält vorzugsweise einen Phosphorgehalt von nicht weniger als 5 Gew.-% und in bevorzugten Ausführungsformen mindestens 3 Phosphatester-Einheiten. Dabei umfassen "Phosphorestereinheiten" Phosphatestereinheiten und Phosphonatestereinheiten. Damit umfassen die erfindungsgemäßen oligomeren Organophosphhorflammschutzmittel Strukturen mit reinen Phosphonat-Einheiten, mit reinen Phosphat-Einheiten sowie mit Phosphonat- und Phosphat-Einheiten.

Flammschutzmittelkombinationen aus Blähgraphit und oligomerem Organophosphorflammschutzmittel und deren Verwendung in Polyurethanschaumstoffen sind bekannt und in der europäischen Patentanmeldung mit der Anmeldenummer EP 12150081.3 beschrieben, die hiermit einbezogen wird.

Als Füllstoffe, insbesondere verstärkend wirkende Füllstoffe, können die an sich bekannten, üblichen organischen und anorganischen Füllstoffe, Verstärkungsmittel und Beschwerungsmittel zugegeben werden. Im Einzelnen seien beispielhaft genannt: anorganische Füllstoffe wie z. B. silikatische Mineralien, beispielsweise Schichtsilikate wie Antigorit, Serpentin, Hornblenden, Amphibole, Chrysotil, Zeolithe, Talkum; Metalloxide, wie z. B. Kaolin, Aluminiumoxide, Aluminiumsilikat, Titanoxide und Eisenoxide, Metallsalze wie z. B. Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und polymermodifierte Polyoxyalken-polyole.

Nähere Angaben über Verwendungs- und Wirkungsweise der oben genannten Hilfsmittel und Zusatzmittel sowie weitere Beispiele sind z. B. im "Kunststoffhandbuch, Band 7, Polyurethane", Carl Hanser Verlag, 3. Auflage 1993, Kapitel 3.4 angegeben.

Organische Polyisocyanate (a), polymere Verbindungen mit mindestens zwei gegenüber Isocyanaten reaktiven Wasserstoffatomen (b), gegebenenfalls Kettenverlängerungs- und/oder Vernetzungsmittel (c), Carbonsäuren mit einer Funktionalität von mindestens 2 (d), Katalysatoren, enthaltend eine Lewisbasekomponente (e) und gegebenenfalls Hilfsmittel und Zusatzstoffe (f) werden vorzugsweise in solchen Mengen zur Umsetzung gebracht, dass der Isocyanatindex im Bereich von 80 bis 150, bevorzugt 95 - 130, besonders bevorzugt 98 - 118 liegt.

Dabei wird unter Isocyanatindex im Rahmen der vorliegenden Erfindung das stöchiometrische Verhältnis von Isocyanatgruppen zu mit Isocyanat reaktiven Gruppen, multipliziert mit 100, verstanden. Unter mit Isocyanat reaktiven Gruppen werden dabei alle in der Reaktionsmischung enthaltenen, mit Isocyanat reaktiven Gruppen, einschließlich chemischer Treibmittel, verstanden, nicht aber die Isocyanatgruppe selbst.

Die Polyurethan-Polyamid-Hartschaumstoffe werden vorzugsweise nach dem one shot-Verfahren in Form von großen Schaumstoffblöcken kontinuierlich in Blockschaumanlagen oder diskontinuierlich in offenen Schaumstoff-Formwerkzeugen hergestellt. Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen, nach dem 2-Komponenten-Verfahren zu arbeiten und als sogenannte Komponente A ein Gemisch aus der polymeren Verbindungen mit mindestens zwei gegenüber Isocyanaten reaktiven Wasserstoffatomen (b), gegebenenfalls Kettenverlängerungs- und/oder Vernetzungsmittel (c), mindestens difunktionelle Carbonsäuren (d), Katalysatoren, enthaltend eine Lewisbasekomponente (e) und gegebenenfalls Hilfsmittel und Zusatzstoffe (f) zu verwenden und als sogenannte Komponente B die organischen, gegebenenfalls modifizierten Polyisocyanate (a) einzusetzen. Vorzugsweise wird dabei eine Mischung, enthaltend die Komponenten (b) und (d) sowie gegebenenfalls die Komponenten (c), (e) und (f) hergestellt und erwärmt, vorzugsweise auf eine Temperatur von 60 bis 150 °C, besonders bevorzugt auf eine Temperatur von 80 bis 130 °C und insbesondere auf eine Temperatur von 100 bis 120 °C erwärmt. Auf dieser Temperatur wird die Mischung vorzugswese mindestens eine Stunde, besonders bevorzugt 1 bis 24 Stunden und insbesondere 6 bis 18 Stunden gerührt, um eine homogene, flüssige Mischung zu erhalten. Anschließend kann die Mischung bis zur Verarbeitung auf Raumtemperatur abgekühlt werden. Da die A- und B-Komponenten sehr gut lagerstabil sind, können sie in dieser Form einfach transportiert und brauchen vor der Verarbeitung nur noch in den entsprechenden Mengen intensiv gemischt werden. Die Vermischung der Aufbaukomponenten a) bis f) oder der Komponenten (A) und (B) kann mit Hochdruck- oder Niederdruck-Verarbeitungsanlagen durchgeführt werden.

Zur Herstellung der Polyurethan-Polyamid-Hartschaumstoffe werden die beschriebenen Ausgangsstoffe, zweckmäßigerweise in Form der Komponenten A und B, bei Temperaturen von ungefähr 15 bis 60 °C, vorzugsweise 20 bis 40 °C gemischt und danach die Reaktionsmischung in offenen, gegebenenfalls temperierten Formwerkzeugen oder in kontinuierlich arbeitenden Blockschaumanlagen aufschäumen gelassen. Dabei wird im Rahmen der Erfindung die Mischung der Komponenten a) bis f) bei Reaktionsumsätzen kleiner 90 %, bezogen auf die Isocyanatgruppen, als Reaktionsmischung bezeichnet.

Aus den erhaltenen Polyurethan-Polyamid-Hartschaumstoffblöcken, können falls erforderlich, entsprechend den herzustellenden Formkörper dimensionierte Schaumstoffblöcke geschnitten und diese in PU-Hartschaumstoffplatten mit einer Dicke von 4 bis 50 mm, vorzugsweise 6 bis 30 mm und insbesondere von 6 bis 20 mm gespalten werden. Hierzu geeignet sind alle technisch üblichen Spaltvorrichtungen, wobei in der Praxis vorzugsweise Horizontalspaltanlagen mit umlaufenden Bandmessern verwendet werden.

Die erhaltenen plastisch verformbaren PUR-Hartschaumstoffplatten können ein- oder mehrseitig mit Klebstoffen, z. B. feuchtigkeitshärtenden Klebstoffen auf Isocyanatbasis oder thermoplastischen Schmelzklebstoffen, beschichtet und danach mit Verstärkungs-, Abdeck- und/oder Dekormaterialien kaschiert werden.

Zur Bildung der Sandwichelemente können übliche Verfahren eingesetzt werden, beispielsweise das Formen und Aushärten in einem beheizen Werkzeug.

Die erhaltenen Produkte zeigen gleichzeitig eine hohe Härte und Biegefestigkeit und eine sehr gute Hydrolysebeständigkeit. Überraschenderweise zeigen die erfindungsgemäßen plastisch verformbaren Polyurethan-Polyamid-Hartschaumstoffe eine geringe Glasübergangstemperatur, insbesondere gegenüber bekannten, plastisch verformbaren Polyurethan-Hartschaumstoffen, und lassen sich damit bei geringen Formtemperaturen plastisch verformen. Insbesondere bei der Herstellung von Fahrzeugverkleidungen, wie Dachhimmeln, kann so die Werkzeugtemperatur reduziert werden, was zu Energieeinsparungen führt. Vorzugsweise weisen erfindungsgemäße Polyurethan-Polyamid-Hartschaumstoffe eine Glastemperatur Tg von kleiner 120 °C, besonders bevorzugt 70 °C bis kleiner 110 °C und insbesondere 75 bis kleiner 100 °C auf. Solche Polyurethan-Polyamid-Hartschaumstoffe weisen darüber hinaus eine hohe Luftdurchlässigkeit und damit eine hohe Schalldämmung bei hervorragenden mechanischen Eigenschaften, wie Steifigkeit und Elastizität, eine hohe Temperaturbeständigkeit gegen Abbau, sowie aufgrund der niedrigeren Reaktionstemperatur eine Vereinfachung der Produktion auf. Ein weiterer Vorteil ist, dass die Exothermie der Schäumreaktion geringer ist als bei der Verwendung von Wasser als Treibmittel und dadurch keine Nachteile durch starke Wärmeentwicklung, wie Kernverbrennungen, bei der Herstellung von Schaumstoffblöcken auftreten, was erfahrungsgemäß auch zu einer geringeren Geruchsimission führt.

Vorzugsweise werden die erfindungsgemäßen plastisch verformbaren Polyurethan-Polyamid-Hartschaumstoffe zur Innenraumverkleidung oder Motorraumverkleidung von Kraftfahrzeugen eingesetzt.

Im Folgenden wird die Erfindung anhand von Beispielen verdeutlicht:
Folgende Substanzen wurden eingesetzt:
   - Polyol A:: Polyetherpolyol mit einer mittleren OH-Zahl von 400 mg KOH/g, einer Funktionalität von 3 und einem Propylenoxydgehalt, bezogen auf das Gesamtgewicht des Polyethers, von 78 Gew.-%.
   - Polyol B:: Polyetherpolyol mit einer mittleren OH-Zahl von 800 mg KOH/g, einer Funktionalität von 3 und einem Propylenoxydgehalt, bezogen auf das Gesamtgewicht des Polyethers, von 55 Gew.-%.
   - Polyol C:: Polyetherpolyol mit einer mittleren OH-Zahl von 28 mg KOH/g, einer Funktionalität von 2,7 und einem Propylenoxydgehalt, bezogen auf das Gesamtgewicht des Polyethers, von 84 Gew.-%.
   - Polyol D:: Polyetherpolyol mit einer mittleren OH-Zahl von 570 mg KOH/g, einer Funktionalität von 3 und einem Propylenoxydgehalt, bezogen auf das Gesamtgewicht des Polyethers, von 70 Gew.-%.
   - Polyol E:: Polyetherpolyol mit einer mittleren OH-Zahl von 160 mg KOH/g, einer Funktionalität von 3 und einem Propylenoxydgehalt, bezogen auf das Gesamtgewicht des Polyethers, von 87 Gew.-%.
   - Polyol F:: Polyetherpolyol mit einer mittleren OH-Zahl von 30 mg KOH/g, einer Funktionalität von 2,2 und einem Propylenoxydgehalt, bezogen auf das Gesamtgewicht des Polyethers, von 93 Gew.-%.
   - Polyol G:: Polyetherpolyol mit einer mittleren OH-Zahl von 250 mg KOH/g, einer Funktionalität von 2 und einem Propylenoxydgehalt, bezogen auf das Gesamtgewicht des Polyethers, von 83 Gew.-%.
   - KV A:: Kettenverlängerer A; Diol mit einer mittleren OH-Zahl von 1250 mg KOH/g
   - KV B:: Kettenverlängerer B; Diol mit einer mittleren OH-Zahl von 949 mg KOH/g
   - Vernetzer: A: Glycerin
   - Disäure A:: Glutarsäure
   - Disäure B:: Azelainsäure
   - Kat A:: 1-Methyl imidazole
   - Kat B:: Triethylendiamin (Dabco^{®} 33LV, Air Products GmbH)
   - Kat C:: Bis-(2-dimethylaminoethyl)ether gelöst in 30wt.% Dipropylenglykol (GE Silicones)
   - Stabi A:: DABCO^{®} 5604, oberflächenaktives Mittel auf Silikonbasis, hergestellt von AirProducts.
   - Stabi B:: Tegostab® B8473, oberflächenaktives Mittel auf Silikonbasis, hergestellt von Evonik
   - Stabi C:: Tegostab® B8476, oberflächenaktives Mittel auf Silikonbasis, hergestellt von Evonik
   - Iso A:: Polymethylendiphenyldiisocyanat mit einem NCO-Gehalt von 31.5 Gew.-% und einer mittleren Funktionalität von 2,7
   - Iso B:: Mischung aus Diphenylmethandiisocyanat und dem entsprechenden Carbodiimid mit einem NCO-Gehalt von 29.5 Gew.-% und einer mittleren Funktionalität von 2,2
   - Iso C:: Diphenylmethandiisocyanat mit einem NCO-Gehalt von 33.5 Gew.-% und einer Funktionalität von 2

Herstellung einer Mischung aus Disäure und Polyol(en):
Die Polyole und die Disäuren sowie, falls vorhanden, Kettenverlängerer und Vernetzer zu den Versuchen gemäß Tabelle 1 wurden vermischt und 12 Stunden bei einer Temperatur von 100 bis 120 °C gerührt. Anschließend wurde die Mischung unter Rühren auf Raumtemperatur abgekühlt und falls vorhanden die Katalysatoren B und C zugegeben. Diese Mischung kann bei Raumtemperatur mehrere Tage gelagert werden, ohne dass eine Phasenseparation auftritt.
Dabei sind die Inhaltsstoffe gemäß Tabelle 1 in Gewichtsteilen angegeben.

Herstellung des Thermoformschaums:
Katalysator A und gegebenenfalls der Siliconstabilisator wurden zu der hergestellten Mischung zugegeben und 10 Sekunden bei Raumtemperatur gerührt. Anschließend wurden die Isocyanate zugegeben und die Mischung weitere 15 Sekunden stark gerührt. Anschließend wurde die Mischung in eine Kartonschachtel gegeben. Am erhaltenen Schaum wurde die Schaumstruktur optisch begutachtet. Zur Bestimmung der Luftdurchlässigkeit wurden die erhaltenen Schäume horizontal in 12mm dicke Scheiben aufgeschnitten. Die Luftdurchlässigkeit wurde anhand der unten beschriebenen Methode bestimmt.

| | Beispiel 1 | Beispiel 2 | Beispiel 3 | Beispiel 4 | Vergleich 1 | Vergleich 2 |
|---|---|---|---|---|---|---|
| Polyol A | 69.1 | 69.1 | 57.6 | 62.4 | | 69.3 |
| Polyol B | | | 16.6 | | | |
| Polyol C | | | | | 4.5 | |
| Polyol D | | | | | 41.0 | |
| Polyol E | | | | | 9.5 | |
| Polyol F | | | | | 24.2 | |
| Glycerin | | | | | 2.3 | |
| Polyol G | | | | | 5.3 | |
| KV A | | | | | 7.7 | |
| KV B | | | | | | 23.0 |
| Disäure A | 29.2 | 29.2 | 24.3 | | | |
| Disäure B | | | | 37.5 | | |
| Wasser | | | | | 4.2 | 6.0 |
| Kat A | 0.2 | 0.2 | 0.2 | 0.1 | | 0.2 |
| Kat B | | | | | 0.4 | |
| Kat C | | | | | 0.1 | |
| Stabi A | 1.5 | 1.5 | 1.3 | | | 1.5 |
| Stabi B | | | | | 0.7 | |
| Stabi C | | | | | 0.1 | |
| Iso A | 80.0 | 60.0 | 80.0 | 60.0 | 60 | 80.0 |
| Iso B | 20.0 | | 20.0 | | | 20.0 |
| Iso C | | 40.0 | | 40.0 | 40 | |
| Start (min:sec) | 00 :45 | 00:45 | 00:45 | 00:20 | 1:05 | 01:10 |
| Gel (min :sec) | 02 :20 | 2:20 | 02:10 | 01:10 | 02:40 | 02:25 |
| Steigzeit (min :sec) | 03 :20 | 3:20 | 03:15 | 02:20 | 04:00 | 03:30 |
| Dichte (g/l) | 28 | 29 | 28 | 30 | 32 | 29 |
| Zellstruktur | fein | fein | fein | fein | fein | fein |
| Staudruck (bar) | 5 | 10 | 10 | 20 | >250 | >250 |
| Offenzelligkeit (%) DIN ISO 4590 | 90 | 70 | 70 | 70 | 25 | 21 |
| Biegefestigkeit (kPa) DIN 53423 | 225 | 190 | 174 | 124 | 226 | 222 |
| E-Modul (kPa) DIN 53423 | 3500 | 2600 | 1600 | 1300 | 2300 | 2400 |
| Tg (°C) ASTM D7028 | 89 | 87 | 90 | 93 | 145 | 143 |
| Abbau Temperatur durch TGA (°C) | 308 | 308 | 300 | 308 | 300 | 300 |

### Luftdurchlässigkeitsmessung:

Eine mittels Bandsäge aus den oben beschriebenen Blöcken gesägte Platte der Maße 200mm x 200mm x12mm (Länge x Breite x Höhe) wird auf eine luftdurchlässige Unterlage gelegt. Auf die Mitte der Platte wird ein unten offener Drucktopf aufgelegt, der mit einem Manometer und einem Durchflussmesser ausgestattet ist. Der Drucktopf wird so auf die Platte aufgespannt, dass kein Spalt zwischen Topf und Platte entsteht. Die Druckluft-Durchflussmenge wird auf 21/min eingestellt, der sich einstellende Staudruck in bar wird am Manometer abgelesen.

Bestimmung der Abbau Temperatur durch Thermogravimetriemessung (TGA):
Eine getrocknete Probe des hergestellten Schaumstoffs (ca. 5-7mg) wird auf einer Mikrowaage in trockener, synthetischer Luft von Raumtemperatur auf 500°C mit einer Aufheizgeschwindigkeit von 20°C/min erwärmt. Der Gewichtsverlust wird zeitabhängig aufgezeichnet. Die Temperatur, bei der die Probe 10% ihres ursprünglichen Gewichts verloren hat, wird als Abbau-Temperatur bezeichnet.

## Patentansprüche

1. Verfahren zur Herstellung von plastisch verformbaren Polyurethan-Polyamid-Hartschaumstoffen mit einer Geschlossenzelligkeit von kleiner als 70%, bei dem man
a) organisches Polyisocyanat mit
b) einer oder mehreren polymeren Verbindungen mit mindestens zwei gegenüber Isocyanaten reaktiven Wasserstoffatomen
c) gegebenenfalls Kettenverlängerungs- und/oder Vernetzungsmittel,
d) eine oder mehrere Carbonsäuren mit einer Funktionalität von mindestens 2,
e) Katalysator, enthaltend eine Lewisbasekomponente und
f) gegebenenfalls Hilfsmittel und Zusatzstoffe
zu einer Reaktionsmischung vermischt und diese Reaktionsmischung zum Polyurethan-Polyamid-Hartschaumstoff ausreagieren lässt.

2. Verfahren nach Anspruch 1, **dadurch gekennzeichnet, dass** die Carbonsäuren mit einer Funktionalität von mindestens 2(d) aliphatische Dicarbonsäure mit 2 bis 30 Kohlenstoffatomen sind.

3. Verfahren nach Anspruch 1, **dadurch gekennzeichnet, dass** die Carbonsäuren (d) als Reinsubstanzen einen Schmelzpunkt von kleiner 200 °C aufweisen.

4. Verfahren nach Anspruch 2 oder 3, **dadurch gekennzeichnet, dass** die die Carbonsäuren mit einer Funktionalität von mindestens 2 (d) lineare, aliphatische Dicarbonsäuren mit 4 bis 9 Kohlenstoffatomen sind.

5. Verfahren nach Anspruch 1, **dadurch gekennzeichnet, dass** die Carbonsäuren mit einer Funktionalität von mindestens 2 (d) Polyesterdicarbonsäuren sind.

6. Verfahren nach einem der Ansprüche 1 bis 4, **dadurch gekennzeichnet, dass** die Carbonsäuren mit einer Funktionalität von mindestens 2 (d) Anionen einer ionischen Flüssigkeit sind.

7. Verfahren nach einem der Ansprüche 1 bis 4, **dadurch gekennzeichnet, dass** die Carbonsäure mit einer Funktionalität von mindestens 2 (d) ein Carbonsäureanhydrid oder ein Carbonsäuresalz ist.

8. Verfahren nach einem der Ansprüche 1 bis 7, **dadurch gekennzeichnet, dass** die Carbonsäuren mit einer Funktionalität von mindestens 2 (d) in den polymeren Verbindungen mit mindestens zwei gegenüber Isocyanaten reaktiven Wasserstoffatomen (b) gelöst vorliegen.

9. Verfahren nach einem der Ansprüche 1 bis 8, **dadurch gekennzeichnet, dass** die Reaktionsmischung weniger als 1 Gew.-% Wasser enthält.

10. Verfahren nach einem der Ansprüche 1 bis 9, **dadurch gekennzeichnet, dass** die polymeren Verbindungen mit mindestens zwei gegenüber Isocyanaten reaktiven Wasserstoffatomen (b) Polyetherpolyole mit einem Gehalt an Polypropylenoxyd von mindestens 50 Gew.-%, bezogen auf den Gehalt an Alkylenoxyd im Polyalkylenoxidpolyol, enthält.

11. Verfahren nach einem der Ansprüche 1 bis 10, **dadurch gekennzeichnet, dass** die Lewisbasekomponente ausgewählt ist aus N-Methylimidazol, Melamin, Guanidin, Cyanursäure, Dicyandiamid, deren Derivaten oder Gemischen davon.

12. Plastisch verformbarer Polyurethan-Polyamid-Hartschaumstoff mit einer Geschlossenzelligkeit von kleiner als 70%, erhältlich nach einem Verfahren nach einem der Ansprüche 1 bis 11.

13. Plastisch verformbarer Polyurethan-Polyamid-Hartschaumstoff nach Anspruch 12, **dadurch gekennzeichnet, dass** dieser eine Dichte von 5 bis 80 g/ mit einer Geschlossenzelligkeit von kleiner als 70% aufweist, erhältlich nach einem Verfahren nach einem der Ansprüche 1 bis 10.

14. Verwendung eines plastisch verformbaren Polyurethan-Polyamid-Hartschaumstoffs nach Anspruch 12 oder 13 zur Innenraumverkleidung oder Motorraumverkleidung von Kraftfahrzeugen.
